# EUROPEAN PATENT SPECIFICATION

(11) **EP 2 977 138 B1**
(45) Date of publication and mention of the grant of the patent: **21.02.2018**
(21) Application number: 14770049.6
(22) Date of filing: 12.03.2014
(51) Int. Cl.: B23K 11/11, B23K 11/30, C22C 38/00, C22C 38/04, C22C 38/58, C22C 38/02, C22C 38/12, C22C 38/08, C22C 38/16, C22C 38/32

(54) **SPOT WELDED JOINT**
PUNKTSCHWEISSNAHT
JOINT SOUDÉ PAR POINTS

(30) Priority: 19.03.2013 JP 2013056659
(43) Date of publication of application: 27.01.2016
(73) Proprietor: Kabushiki Kaisha Kobe Seiko Sho (Kobe Steel, Ltd.), Kobe-shi, Hyogo 651-8585 (JP)
(72) Inventor: MURAKAMI, Toshio, Kobe-shi, Hyogo 651-2271 (JP)
(74) Representative: Müller-Boré & Partner Patentanwälte PartG mbB
(86) International application number: PCT/JP2014/056566
(87) International publication number: WO 2014/148341

(56) References cited:
- DE-A1- 4 323 148
- DE-C1- 4 039 270
- JP-A- 2012 502 801
- US-A- 2 001 688
- US-A- 2 109 461
- US-A- 3 689 731
- US-A- 4 831 228
- US-A1- 2005 029 234
- US-A1- 2011 073 572
- Jiyoung Yu ET AL: "Characteristics of Resistance Spot Welding for 1 GPa Grade Twin Induced Plasticity Steel", MATERIALS TRANSACTIONS, 11 October 2012 (2012-10-11), pages 2011-2018, XP055308029, Sendai DOI: 10.2320/matertrans.M2012167 Retrieved from the Internet: URL:https://www.jim.or.jp/journal/e/pdf3/5 3/11/2011.pdf [retrieved on 2016-10-05]
- RINSEI IKEDA ET AL: "Development of advanced resistance spot welding process using control of electrode force and welding current during welding", WELDING INTERNATIONAL, TAYLOR & FRANCIS, ABINGDON, GB, vol. 28, no. 1/3, 26 October 2012 (2012-10-26), pages 13-20, XP001590060, ISSN: 0950-7116, DOI: 10.1080/09507116.2012.715880 [retrieved on 2012-10-26]

## Description

### TECHNICAL FIELD

The present invention relates to a spot welded joint, and particularly relates to a welded joint obtained by stacking two thin steel sheets with each other and spot-welding them.

### BACKGROUND ART

Resistance spot welding is most generally utilized for joining thin steel sheets with each other. On the other hand, in the case of a thin steel sheet for automobiles, an increase in strength is promoted for compatibility between a reduction in weight and safety, and it becomes necessary to add various alloy elements for realizing it. As a result, weldability is deteriorated, and also in a high strength steel sheet, it is demanded to ensure mechanical characteristics (hereinafter also simply referred to as "characteristics") of a welded joint.

Accordingly, in order to improve the characteristics of a spot welded joint, various joining methods have been proposed.

### [Conventional Art 1]

For example, in Patent Document 1, there is disclosed a spot welding method of making it possible to join double or triple-layered metal sheets, dissimilar metals or the like by controlling welding pressure by electrodes and a current pattern. However, the shape of a nugget formed in a welded joint by this method is a usual biconvex shape in which the curvature radius at both ends thereof in its diameter direction is small, as shown in Fig.8 and Fig. 9 of the same document, so that a sufficient effect of improving the characteristics cannot be expected.

### [Conventional Art 2]

On the other hand, in Patent Document 2, there is disclosed a spot welding method of refining a structure of nugget ends by applying vibration due to ultrasonic impact during solidification after melting, thereby improving the strength of a welded joint. However, this method requires special equipment, and it is therefore difficult to be actually applied.

### [Conventional Art 3]

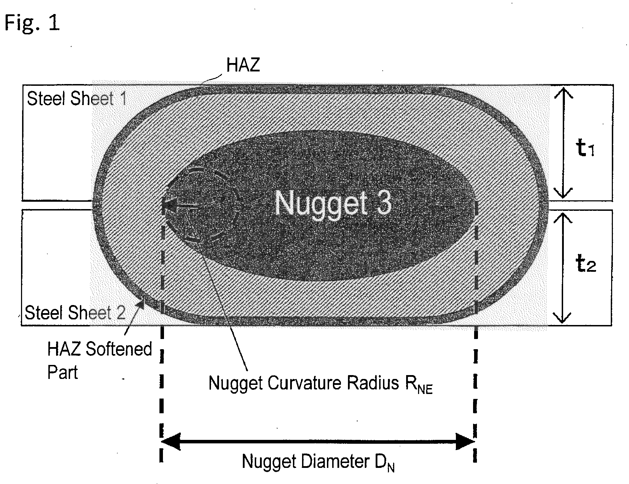

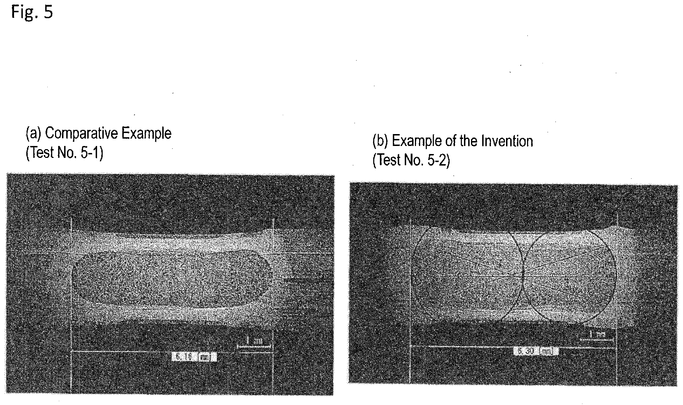

Further, in Patent Document 3, there is disclosed a joining method of enlarging a corona bond part formed around a nugget by performing spot welding while pressing down a periphery of a contact portion of an electrode and a material to be welded using an indenter when being electrified, thereby improving the strength of a welded joint. According to this method, a region pressed down by the indenter arranged in the periphery of the electrode is converted to the corona bond, so that it is necessary to heat this region. Therefore, the indenter arranged in the periphery of the electrode is not positively cooled. Accordingly, in the welded joint formed by this method, the shape of the nugget is a biconvex shape in which the curvature radius at both ends thereof in its diameter direction is small, similarly to the conventional case, although the corona bond part is enlarged, as shown in Fig. 1 and Fig. 5 of the same document. This is therefore entirely different from the technical idea of the present invention in which the shape of the nugget formed in the welded joint has a pill case shape in which the curvature radius at both ends thereof in its diameter direction is substantially larger than usual by positively cooling the external pressurizing part in the periphery of the electrode.

### PRIOR ART DOCUMENTS

### PATENT DOCUMENTS

Patent Document 1: JP-A-2010-240740
Patent Document 2: JP-A-2011-194411
Patent Document 3: JP-A-7-178563

### NON-PATENT DOCUMENTS

Document D1 (Yu et al. 2012) describes the characteristics of resistance spot welding for 1 GPa grade twin induced plasticity steel (cf. for example the abstract).

### SUMMARY OF THE INVENTION

### PROBLEMS THAT THE INVENTION IS TO SOLVE

The present invention has been made in order to solve the above-mentioned problems, and provides a spot welded joint excellent in joint strength, even it is a welded joint obtained by spot-welding high strength steel sheets with each other.

### MEANS FOR SOLVING THE PROBLEMS

A spot welded joint of the present invention is a welded joint including two steel sheets having sheet thicknesses of t₁ and t₂, which have been stacked and spot-welded ,
in which a nugget formed by the spot welding has a diameter of 3√{(t₁+t₂)/2} or more (the units of the diameter of the nugget, t₁ and t₂ are all mm), and in which the above-mentioned nugget has a curvature radius at both ends in a diameter direction thereof, in a cross section in a sheet thickness direction, of 0.3(t₁+t₂) or more.

Further, in the above-mentioned construction, the above-mentioned two steel sheets have a component composition, by mass% (hereinafter the same in component composition), containing
C: 0.01 to 0.80%,
Si: 3% or less,
Mn: 0.2 to 10% and
a remainder being Fe and inevitable impurities.

Furthermore, in the above-mentioned construction, the above-mentioned two steel sheets have a component composition further containing at least one kind selected from the group consisting of
Cr:0.01 to 1.50%,
Mo: 0.01 to 1.50%,
Ni: 0.01 to 1.50%,
Cu: 0.01 to 1.50% and
B: 0.0001 to 0.010%.

In addition, in the above-mentioned construction, there is contained at least one kind selected from the group consisting of
Ti: 0.001 to 0.20%,
Nb: 0.001 to 0.20% and
V: 0.001 to 0.20%.

### ADVANTAGEOUS EFFECTS OF THE INVENTION

According to the present invention, the shape of a nugget formed by spot welding is not a conventional biconvex shape but a pill case shape (approximately cylindrical shape), specifically, the nugget diameter is controlled to 3√{(t₁+t₂)/2} or more (the units of the nugget diameter, t₁ and t₂ are all mm) and the curvature radius at both ends of the nugget in its diameter direction, in a cross section in a sheet thickness direction, is controlled to 0.3(t₁+t₂) or more. Thus, a direction in which a region liable to be embrittled or a HAZ softened part (HAZ: heat affected zone) extends when tensile load is applied to a welded joint part is shifted from a direction of 45° in which stress is maximized. Accordingly, it has become possible to provide a spot welded joint excellent in joint strength, even it is a welded joint obtained by spot-welding high strength steel sheets with each other.

### BRIEF DESCRIPTION OF THE DRAWINGS

[Fig. 1] Fig. 1 is a vertical cross-sectional view illustrating a schematic configuration of a spot welded joint composed of two stacked steel sheets.
[Fig. 2] Fig. 2 is vertical cross-sectional views for schematically explaining fracture morphology in a spot welded joint of the present invention. (a) illustrates a state where tensile shear load is applied to the welded joint, (b) illustrates a state where a crack path appears at a boundary between a HAZ and a base material part, and (c) illustrates a state where a crack path appears at a boundary between a nugget and the HAZ, respectively.
[Fig. 3] Fig. 3 is vertical cross-sectional views for schematically explaining fracture morphology in a conventional spot welded joint. (a) illustrates a state where tensile shear load is applied to the welded joint, (b) illustrates a state where a crack path appears at a boundary between a HAZ and a base material part, and (c) illustrates a state where a crack path appears at a boundary between a nugget and the HAZ, respectively.
[Fig. 4] Fig. 4 is partial vertical cross-sectional views illustrating rough shapes of leading end parts of welding tips used in Examples. (a) is one used in Comparative Examples, and (b) is one used in Examples of the Invention.
[Fig. 5] Fig. 5 is photographs illustrating cross sections of spot welded joints prepared in examples. (a) is Comparative Example, and (b) is Example of the Invention.

### MODE FOR CARRYING OUT THE INVENTION

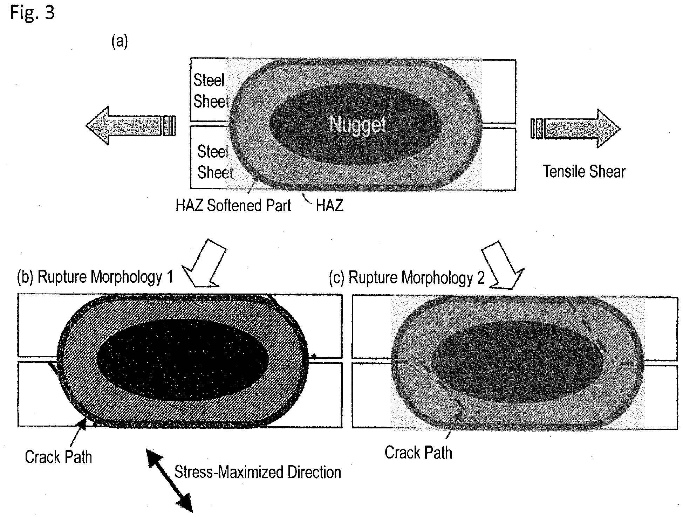

In order to solve the above-mentioned problems, the present inventors have first investigated fracture morphology of conventional welded joint parts in a tensile shear test and a cross tensile test. For example, the case of the tensile shear test of the conventional welded joint is schematically illustrated in Fig. 3. When the tensile shear load is applied to the welded joint part, as illustrated in (a), rupture tends to occur in a direction of 45° with respect to a tensile direction (that is, a direction along a joining surface) along an outer periphery of a nugget, as shown in (b) and (c). Further, also in the case of the cross tensile test, rupture similarly tends to occur in a direction of 45° with respect to a tensile direction (that is, a direction vertical to the joining surface) along an outer periphery of the nugget, although not shown. The reason why in this way the conventional welded joint parts are ruptured in the direction of 45° with respect to the tensile direction along the outer periphery of the nugget in both the tensile shear test and the cross tensile test is assumed to be due to the following mechanism.

That is, as technical common sense in material mechanics, it is known that stress/strain is maximized in a direction of 45° with respect to a tensile direction of a material. Further, in a conventional welded joint, the nugget has a biconvex shape, so that there is present a portion extending along the direction of 45° with respect to the tensile direction as the above-mentioned stress-maximized direction, in a region which is liable to be embrittled in a nugget-HAZ boundary part near both ends thereof in its diameter direction or a HAZ softened part. Accordingly, in the nugget-HAZ boundary part or the HAZ softened part, a crack proceeds along the above-mentioned stress-maximized direction, leading to button rupture, so that it has been difficult to improve the joint strength.

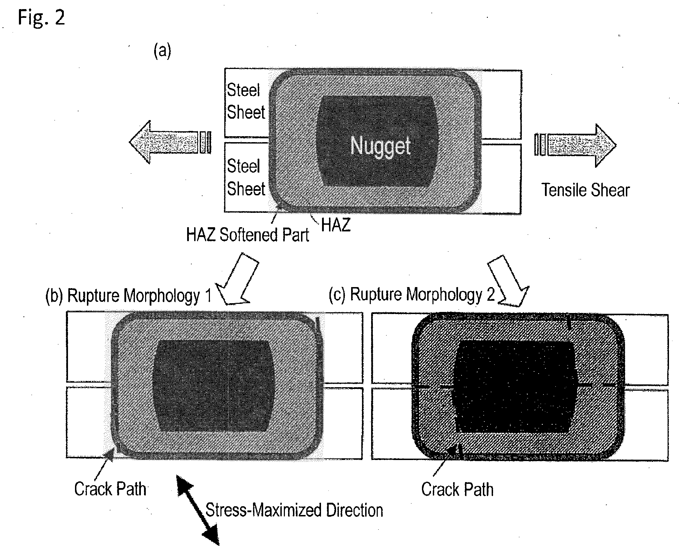

Therefore, the present inventors have considered that when the shape of the nugget or the shape of the HAZ part in the welded joint part has a pill case shape (approximately cylindrical shape), not the conventional biconvex shape, as shown in (a) to (c) of Fig. 2, the portion extending along the above-mentioned stress-maximized direction does not exist in the nugget-HAZ boundary part or the HAZ softened part, which leads the crack-proceeding direction to be largely shifted from the above-mentioned stressmaximized direction, thereby being able to improve the joint strength.

Incidentally, when the nugget diameter is small, the rupture mode becomes peel rupture, not the button rupture, so that the joint strength is determined by only the nugget diameter without depending on the shape of the nugget. Accordingly, in order to enjoy the effect of improving the joint strength by changing the nugget shape, it is necessary to sufficiently increase the nugget diameter.

Based on the above-mentioned thought study, experiments of verification explained in [Examples] described later have been performed. As a result, conclusive evidence has been obtained, so that further studies have been conducted, thereby leading to completion of the present invention.

A spot welded joint of the present invention is a welded joint obtained by stacking two steel sheets 1 and 2 having sheet thicknesses of t₁ and t₂, respectively, with each other and spot-welding them, in which a nugget 3 formed by the spot welding has a diameter D_{N} of 3√{(t₁+t₂)/2} or more (the units of the diameter of the nugget, t₁ and t₂ are all mm), and in which the above-mentioned nugget 3 has a curvature radius R_{NE} at both ends in diameter direction thereof, in a cross section in a sheet thickness direction, of 0.3(t₁+t₂) or more (see Fig.1).

Requirements for specifying the present invention are described in detail below.

### [Nugget diameter D_{N}: 3√{(t₁+t₂)/2} or more (the units of the nugget diameter D_{N}, t₁ and t₂ are all mm)]

The nugget diameter D_{N} is a parameter for specifying the size of the nugget. As described above, when the nugget is small, the peel rupture occurs. Accordingly, the joint strength cannot be ensured, and the effect due to the change in nugget shape cannot be obtained.

In order to prevent the peel rupture and to obtain the effect due to the change in nugget shape, the nugget diameter D_{N} is 3√{(t₁+t₂)/2} or more, preferably 3.5√{(t₁+t₂)/2} or more and more preferably 4√{(t₁+t₂)/2} or more. Here, in spot welding, it has been generally performed to control the joint strength with the nugget diameter, and in spot welding of thin steel sheets having a sheet thickness of t (unit: mm) stacked with each other, the nugget diameter is required to be 4√t or more, or 5√t or more. Following this case, in the definition of the above-mentioned nugget diameter of the preset invention, a formula in the form of a√t or more (a: constant) is employed, the average sheet thickness (t₁+t₂)/2 is used as the sheet thickness t, and a value of the constant a is defined so as to ensure the predetermined joint strength.

### [Curvature radius R_{NE} at both ends of the nugget in its diameter direction, in a cross section in a sheet thickness direction: 0.3(t₁+t₂) or more]

The curvature radius R_{NE} at both ends of the nugget in its diameter direction, in a cross section in a sheet thickness direction, is a parameter for specifying the nugget shape. By increasing the curvature radius R_{NE} (that is, by changing the cross-sectional shape of the nugget from the biconvex shape in which both ends thereof in its diameter direction are sharp to the pill case shape in which both ends thereof in its diameter direction is squashed toward a central part), a direction of crack propagation during the button rupture is shifted from the direction of 45° in which stress is maximized, thereby suppressing progression of fracture and being able to improve the joint strength.

In order to effectively exert the above-mentioned function, the curvature radius R_{NE} is 0.3(t₁+t₂) or more, preferably 0.4(t₁+t₂) or more, and more preferably 0.5(t₁+t₂) or more.

It is for the following reason that the curvature radius R_{NE} is specified herein by an inequality containing (t₁+t₂). That is, the shape of the nugget according to the present invention can be almost identified by the above-mentioned curvature radius R_{NE} and the nugget thickness. Further, it is found that the nugget thickness occupies an approximately constant ratio of about several tens of percents of the total sheet thickness (t₁+t₂). Accordingly, considering that in order to identify the nugget shape, the above-mentioned curvature radius R_{NE} may be specified by the ratio to the total sheet thickness (t₁+t₂), a formula having a form of b(t₁+t₂) or more (b: constant) is employed in the definition of the above-mentioned curvature radius R_{NE}, and a value of the constant b is defined so as to ensure the predetermined joint strength.

### [Sheet thicknesses t₁ and t₂ of two steel sheets]

The welded joint according to the present invention is intended for joining of thin steel sheets. Though the sheet thicknesses t₁ and t₂ of two steel sheets may be the same or different, it is recommended that both of them are within a range of 0.10 to 5.0 mm, and further within a range of 0.2 to 3.0 mm.

### [Component composition and the like of two steel sheets]

Although the operational effects of the present invention are also exerted to the spot welded joint of low strength steel sheets, the problem of deterioration in joint strength significantly occurs in the spot welding of high strength steel sheets, as described above. It is therefore recommended that the present invention is particularly applied to the high strength steel sheets.

That is, as the above-mentioned two steel sheets, there are recommended ones having a component composition, by mass% (hereinafter the same in component composition), containing C: 0.01 to 0.80%, Si: 3% or less, Mn: 0.2 to 10% and a remainder being Fe and inevitable impurities and having a high strength in which the tensile strength is 590 MPa or more. As the kind of steel sheet, there are a cold-rolled steel sheet, a galvanized steel sheet, an alloyed galvanized steel sheet, an aluminum coated steel sheet, and the like, regardless of the presence/absence of and difference in surface treatment. Incidentally, the two steel sheets may be the same or different in component composition as long as it is within the above-mentioned component range, and may also be the same or different in kind.

### C: 0.01 to 0.80%

C is an important element for ensuring the strength of the base material and the welded joint. In order to ensure the strength thereof, the C content is preferably 0.01% or more. However, when the C content becomes excessive, a blowhole or a crack becomes liable to appear in a melted part (that is, a nugget part), resulting in rather decreasing the strength (particularly, bonding strength). Accordingly, the upper limit of the C content is preferably 0.80%. Incidentally, the more preferred lower limit of the C content is 0.03%, and the more preferred upper limit thereof is 0.40%.

### Si: 3% or less

Si functions as a deoxidizing agent, and is an effective element for ensuring the strength of weld metal and decreasing oxygen. Such effects increase as the content thereof increases. However, when the Si content becomes excessive, hot-dip plating properties are deteriorated. It is therefore preferably 3% or less, and more preferably 2% or less.

### Mn: 0.2 to 10%

Mn is an effective element for improving the strength of the base material. Such an effect increases as the content thereof increases. However, when the Mn content becomes excessive, surface flash becomes liable to be generated during spot welding to cause deterioration of welding workability. It is therefore preferably 10% or less, and more preferably 5% or less.

Other than the above-mentioned basic components, the steel sheets contain Fe and inevitable impurities (P, S, N, O and the like).

The above-mentioned two steel sheets may further contain, as needed, (i) at least one kind selected from the group consisting of Cr: 0.01 to 1.50%, Mo: 0.01 to 1.50%, Ni: 0.01 to 1.50%, Cu: 0.01 to 1.50% and B: 0.0001 to 0.010% and (ii) at least one kind selected from the group consisting of Ti: 0.001 to 0.20%, Nb: 0.001 to 0.20% and V: 0.001 to 0.20% and depending on the kind of these contained components, characteristics of the welded joint are further improved.

### (i) At least one kind selected from the group consisting of Cr: 0.01 to 1.50%, Mo: 0.01 to 1.50%, Ni: 0.01 to 1.50%, Cu: 0.01 to 1.50% and B: 0.0001 to 0.010%

These elements are useful elements for contributing to improvement in joint strength by improving quenching property of the welding part.

In order to effectively exert the above-mentioned function, the respective elements are preferably contained in amounts equivalent to or more than the lower limit values. However, when they are excessively contained, the welding part is embrittled to deteriorate the joint strength. Accordingly, the respective elements are preferably contained in amounts equivalent to or less than the upper limit values.

### (ii) At least one kind selected from the group consisting of Ti: 0.001 to 0.20%, Nb: 0.001 to 0.20% and V: 0.001 to 0.20%

These elements are useful elements for contributing to improvement in joint strength by performing precipitation strengthening of the welding part.

In order to effectively exert the above-mentioned function, the respective elements are preferably contained in amounts equivalent to or more than the lower limit values. However, when they are excessively contained, the welding part is embrittled to deteriorate the joint strength. Accordingly, the respective elements are preferably contained in amounts equivalent to or less than the upper limit values.

A preferred method for preparing the welded joint according to the present invention is described below.

### [Preferred method for preparing the welded joint according to the present invention]

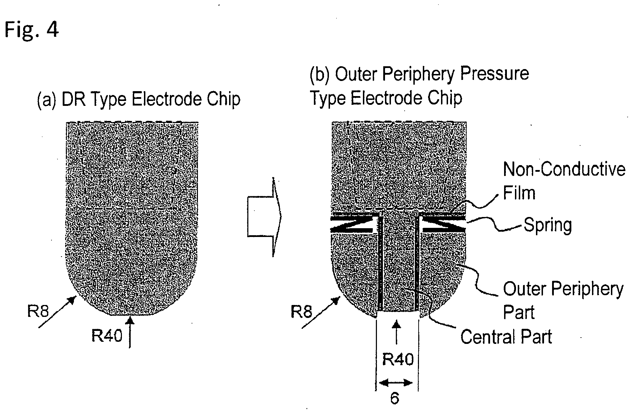

As in the conventional case, in the case where normal electrode chips (see (a) of Fig. 4) such as DR type or tip smooth type is used and an stacked part of the steel sheets is sandwiched between a pair of the electrode chips and subjected to spot welding, when welding current is increased in order to increase the nugget diameter, a nugget is formed while a region heated by resistance heating and melted outwardly spreading along stacked faces of the two steel sheets. Accordingly, a biconvex shaped nugget is formed which has a small curvature radius at both ends of the nugget in its diameter direction, in a cross section in a sheet thickness direction. Further, when welding pressure by the electrode chips is increased, trying to prevent the above-mentioned melted region from being outwardly spread from the stacked faces of the steel sheets, a space between the two steel sheets around the electrode chips is opened, and the melted material is outwardly protruded through the opened space. This results in the occurrence of expulsion at edge to cause a problem of deterioration in joint strength. It is therefore difficult to prepare the welded joint satisfying both the requirements of the nugget diameter and the curvature radius at both ends of the nugget in its diameter direction, which are specified in the present invention, by the method of controlling the welding current and the welding pressure using the conventional electrode chips.

The present inventors have variously studied means for preparing the welded joint satisfying both the requirements of the nugget diameter and the curvature radius at both ends of the nugget in its diameter direction, which are specified in the present invention. As a result, for example, it has been found that the welded joint according to the present invention can be prepared easily and surely by the following means.

That is, an electrode chip(referred to as an "outer peripheral part pressure type electrode chip" in this specification) is used, in which the electrode chip is formed of a chip central part and a chip outer peripheral part which are divided separately from each other, in which the chip central part is composed of a copper-based material, similarly to the conventional electrode chip, the chip outer peripheral part is composed of a highly thermal conductive material, and further, a non-conductive film is allowed to intervene between the central part and the outer peripheral part, thereby being able to independently adjust the welding pressure of the central part and the outer peripheral part (see (b) of Fig. 4). Thus, the welded joint according to the present invention can be prepared by independently adjusting the current value and the welding pressure of the central part and the outer peripheral part during spot welding.

That is, the chip central part is electrified to produce heat between contact faces of the two steel sheets, thereby forming a nugget. On the other hand, the chip outer peripheral part is not electrified by insulating it from the chip central part with the non-conductive film, and, while releasing heat by bringing the highly thermal conductive material into contact with the steel sheets, they are sandwiched under a moderate welding pressure.

This prevents the melted material from being protruded from the stacked faces of the steel sheets, thereby suppressing the occurrence of expulsion at edge to ensure the sufficiently large nugget diameter. At the same time, by cooling a periphery of the nugget formed, it suppresses preferential growth of the nugget in a direction along the stacked faces of the two steel sheets to promote growth of the nugget in a sheet thickness direction.

As a result, the shape of the nugget becomes such a pill case shape that the ends of the nugget in its diameter direction are crushed toward the central part, not the conventional biconvex shape, and the welded joint satisfying the nugget diameter and the curvature radius at both ends of the nugget in its diameter direction specified in the present invention can be obtained.

### EXAMPLES

The present invention is described in greater detail below by referring to Examples, but the present invention is not limited by the Examples below. Application can be made with appropriate variations within the range where it can accord with the spirit described above and below, and such variations are all included within the technical scope of the present invention.

As two steel sheets to be joined by spot welding, mild steel, a 590 MPa grade steel sheet, a 980 MPa grade steel sheet, and a 1470 MPa grade steel sheet each having a component composition shown in Table 1 were used and the two steel sheets each having a steel grade and a sheet thickness shown in Table 2 were stacked with each other in various combinations, and subjected to the spot welding.

As a welding apparatus, a single-phase AC type resistance spot welding machine (50 Hz) was used and the one was used which was provided with either (a) a usual DR type electrode chip made of a chromium copper alloy or (b) an outer periphery pressure type electrode chip, schematic cross-sectional shapes of which are shown in Fig. 4. As the outer periphery pressure type electrode chip (b), one was used in which the chip central part was made of the chromium copper alloy and various materials different in thermal conductivity were used in the chip outer peripheral part. The chip central part was covered, for example, with an AlN film as the non-conductive film, thereby electrically insulating it from the chip outer peripheral part, and the chip central part and the chip outer peripheral part were slidably connected to each other with springs. The electrode chip was constructed so that the distribution of the welding pressure by the chip central part and the chip outer peripheral part could be freely changed by changing the spring constant of these springs.

The spot welding was performed with the welding pressure and the current value during electrification of the condition shown in Table 2, and the electrification time of 10 cycles (0.2 s; constant).

The test results are shown in Table 3.

Here, as for a welded joint after the spot welding, the nugget diameter and the curvature radius at both ends of the nugget in its diameter direction were measured by cutting out a cross section in a sheet thickness direction passing through a center of the nugget in a plan view and analyzing an image obtained by taking an image of the cross section.

Incidentally, the curvature radius at both ends of the nugget in its diameter direction was determined specifically as shown below. That is, as for each of both ends of the nugget in its diameter direction, a circle was drawn which passes through three intersections in total, an intersection of an interface between the two steel sheets 1 and 2 with an outer periphery of the nugget, and intersections of two faces apart from the interface of the two steel sheets 1 and 2 by t₁/4 in a sheet thickness direction of the steel sheet 1 and by t₂/4 in a sheet thickness direction of the steel sheet 2, respectively, with the outer periphery of the nugget. The radius of that circle was defined as the curvature radius at one end of the nugget in its diameter direction. The two curvature radiuses thus determined with respect to each of both ends of the nugget in its diameter direction were arithmetically averaged, and this value was taken as the curvature radius at both ends of the nugget in its diameter direction.

Further, as for a welded joint prepared under the same conditions as described above, a tensile shear test was performed separately, and the joint strength during rupture was measured.

The joint strength is largely affected not only by the nugget diameter and the curvature radius of the nugget diameter ends, but also by the steel sheet strength, the sheet thickness and the like of the base material, so that it is difficult to evaluate the effects of the invention with an absolute value thereof.

Therefore, in the present Examples, using, as a reference, the joint strength obtained at the time when the steel grade and the sheet thickness of the base material and the welding conditions (the total welding pressure and the welding current) were equivalent and when conventional DR type were used as electrode chips, the nugget shape was changed by changing only the type of electrode chip and the ratio of central part welding pressure and outer peripheral part welding pressure. The case where the resulting joint strength showed a value 15% or more higher than the above-mentioned reference was determined as acceptable (○), as the welded joint having excellent joint strength was obtained, and the case of less than 15% was determined as unacceptable (x). Further, as distinguished therefrom, the case where it showed a value 20% or more higher than the above-mentioned reference was indicated by ⊙, as the welded joint having more excellent joint strength was obtained, and the case where it showed a value 25% or more higher than the above-mentioned reference was indicated by ⊙⊙, as particularly excellent joint strength was obtained.

**[Table 1]**

| Steel Grade No. | Component (mass%, ppm only for B), Remainder Fe and Inevitable Impurities | | | | | | TS (MPa) | Remarks |
|---|---|---|---|---|---|---|---|---|
| | C | Si | Mn | Cr | Ti | B | | |
| A | 0.03 | 0.05 | 0.40 | - | - | - | 294 | Mild steel |
| B | 0.08 | 0.50 | 1.50 | - | - | - | 610 | 590 MPa grade steel sheet |
| C | 0.15 | 1.50 | 2.00 | - | - | - | 1025 | 980 MPa grade steel sheet |
| D | 0.22 | 0.20 | 1.20 | 0.20 | 0.03 | 10 | 1533 | 1500 MPa grade steel sheet |

| | | | | | | | | |
|---|---|---|---|---|---|---|---|---|
| (-: not added) | | | | | | | | |

**[Table 2]**

| Test No. | Kind of Steel Sheet | | | | Welding Conditions | | | | | | |
|---|---|---|---|---|---|---|---|---|---|---|---|
| | Steel Sheet 1 | | Steel Sheet 2 | | Electrode Chip | | | Total Welding Pressure (N) | Central Part Welding Pressure (N) | Outer Peripheral Part Welding Pressure (N) | Welding Current (kA) |
| | Steel Grade No. | Sheet Thickness t₁ (mm) | Steel Grade No. | Sheet Thickness t₂ (mm) | Type | Outer Peripheral Part | Thermal Conductivity (W/mK) | | | | |
| 1-1 | A | 1.2 | A | 1.2 | Usual | - | - | 3000 | 3000 | - | 8 |
| 1-2 | A | 1.2 | A | 1.2 | Outer periphery pressure | Chromium copper | 323 | 3000 | 2500 | 500 | 8 |
| 2-1 | B | 1.2 | B | 1.2 | Usual | - | - | 3000 | 3000 | - | 8 |
| 2-2 | B | 1.2 | B | 1.2 | Outer periphery pressure | Chromium copper | 323 | 3000 | 2500 | 500 | 8 |
| 3-1 | C | 1.2 | C | 1.2 | Usual | - | - | 3000 | 3000 | - | 5 |
| 3-2 | C | 1.2 | C | 1.2 | Outer periphery pressure | Chromium copper | 323 | 3000 | 2500 | 500 | 5 |
| 4-1 | C | 1.2 | C | 1.2 | Usual | - | - | 3000 | 3000 | - | 6 |
| 4-2 | C | 1.2 | C | 1.2 | Outer periphery pressure | Chromium copper | 323 | 3000 | 2500 | 500 | 6 |
| 5-1 | C | 1.2 | C | 1.2 | Usual | - | - | 3000 | 3000 | - | 8 |
| 5-2 | C | 1.2 | C | 1.2 | Outer periphery pressure | Chromium copper | 323 | 3000 | 2500 | 500 | 8 |
| 5-3 | C | 1.2 | C | 1.2 | Outer periphery pressure | Iron | 80 | 3000 | 2500 | 500 | 8 |
| 5-4 | C | 1.2 | C | 1.2 | Outer periphery pressure | Silicon nitride | 25 | 3000 | 2500 | 500 | 8 |
| 5-5 | C | 1.2 | C | 1.2 | Outer periphery pressure | Zirconia | 3 | 3000 | 2500 | 500 | 8 |
| 5-6 | C | 1.2 | C | 1.2 | Outer periphery pressure | Alumina | 32 | 3000 | 2500 | 500 | 8 |
| 6-1 | D | 1.2 | D | 1.2 | Usual | - | - | 3000 | 3000 | - | 8 |
| 6-2 | D | 1.2 | D | 1.2 | Outer periphery pressure | Chromium copper | 323 | 3000 | 2500 | 500 | 8 |
| 7-1 | A | 1.0 | C | 1.6 | Usual | - | - | 3000 | 3000 | - | 8 |
| 7-2 | A | 1.0 | C | 1.6 | Outer periphery pressure | Chromium copper | 323 | 3000 | 2500 | 500 | 8 |
| 8-1 | B | 1.0 | D | 1.6 | Usual | - | - | 3000 | 3000 | - | 8 |
| 8-2 | B | 1.0 | D | 1.6 | Outer periphery pressure | Chromium copper | 323 | 3000 | 2500 | 500 | 8 |

**[Table 3]**

| Test No. | Welded Joint | | | | Joint Strength | | |
|---|---|---|---|---|---|---|---|
| | Nugget Diameter | | Curvature Radius at Both Ends of Nugget in Its Diameter Direction | | Absolute Value (kN) | Improving Effect (%) | Remarks |
| | D_{N} (mm) | D_{N}/ √{(t1+t2)/2} | R_{NE} (mm) | R_{NE}/ (t1+t2) | | | |
| 1-1 | 5.69 | 5.19 | 6.7 | 0.20 | 6.7 | 0 | × |
| 1-2 | 5.83 | 5.32 | 9.5 | 0.61 | 9.5 | 42 | ⊙⊙ |
| 2-1 | 5.96 | 5.44 | 8.7 | 0.23 | 8.7 | 0 | × |
| 2-2 | 5.86 | 5.35 | 11.6 | 0.55 | 11.6 | 32 | ⊙⊙ |
| 3-1 | 3.17 | 2.89 | 10.5 | 0.19 | 10.5 | 0 | × |
| 3-2 | 3.10 | 2.83 | 11.1 | 0.40 | 11.1 | 5 | × |
| 4-1 | 4.16 | 3.80 | 11.5 | 0.20 | 11.5 | 0 | × |
| 4-2 | 4.21 | 3.84 | 14.4 | 0.45 | 14.4 | 15 | ○ |
| 5-1 | 6.16 | 5.21 | 12.5 | 0.25 | 12.5 | 0 | × |
| 5-2 | 6.30 | 5.32 | 16.7 | 0.57 | 16.7 | 34 | ⊙⊙ |
| 5-3 | 5.93 | 5.41 | 15.3 | 0.41 | 15.3 | 23 | ⊙ |
| 5-4 | 5.97 | 5.45 | 13.6 | 0.23 | 13.6 | 9 | × |
| 5-5 | 5.52 | 5.04 | 13.2 | 0.20 | 13.2 | 5 | × |
| 5-6 | 5.75 | 5.25 | 13.5 | 0.25 | 13.5 | 8 | × |
| 6-1 | 5.95 | 5.43 | 18.9 | 0.20 | 18.9 | 0 | × |
| 6-2 | 5.55 | 5.07 | 25.1 | 0.55 | 25.1 | 33 | ⊙⊙ |
| 7-1 | 5.89 | 5.17 | 7.3 | 0.20 | 7.3 | 0 | × |
| 7-2 | 5.95 | 5.22 | 10.4 | 0.52 | 10.4 | 42 | ⊙⊙ |
| 8-1 | 5.78 | 5.07 | 10.6 | 0.19 | 10.6 | 0 | × |
| 8-2 | 5.91 | 5.18 | 14.2 | 0.70 | 14.2 | 34 | ⊙⊙ |

(Underlined: out of the scope of the invention)

In Table 3, the welded joints of Test Nos. 1-2, 2-2, 4-2, 5-2, 5-3, 6-2, 7-2 and 8-2 are Examples of the Invention, which satisfy all the requirements of the present invention. All the welded joints of Examples of the Invention are increased in joint strength by 15% or more than the reference, which shows that the joint strength is substantially improved.

In contrast, the welded joints of Test Nos. 1-1, 2-1, 3-1, 4-1, 5-1, 6-1, 7-1 and 8-1 are the reference welded joints (Comparative Examples) prepared by using the usual DR type electrode chips. Depending on the welding condition, there are some cases where the nugget diameter satisfies the requirement of the present invention. However, the curvature radius at both ends of the nugget in its diameter direction does not satisfy the requirement of the present invention, and the sufficiently high joint strength is not obtained.

Further, the welded joints of Test Nos. 3-2 and 5-4 to 5-6 were prepared by using the outer periphery pressure type electrode chips. However, they are Comparative Examples which do not satisfy any one of the requirements of the present invention. In the joint strength of the welded joints of these Comparative Examples, an improving effect from the joint strength of the standard welded joints is less than 15%, which shows that the improving effect is insufficient.

For example, the welded joint of Test No. 3-2 satisfies the requirement of the present invention in the curvature radius at both ends of the nugget in its diameter direction by employing the outer periphery pressure type electrode chips. However, the welding current was too small to sufficiently increase the nugget diameter. Thus, the sufficient improving effect of the joint strength is not obtained.

Further, the welded joints of Test Nos. 5-4 to 5-6 satisfies the requirement of the present invention in the nugget diameter by employing the outer periphery pressure type electrode chips and performing joining with the sufficiently high welding current. However, since the materials having low thermal conductivity were used in the outer peripheral parts of the electrode chips, a cooling function was insufficient, so that the curvature radius at both ends of the nugget in its diameter direction has not sufficiently increased. Still, the sufficient improving effect of the joint strength is not obtained.

As a reference, in Fig. 5, appearances of cross sections of the welded joints of (a) Comparative Example (Test No. 5-1) and (b) Example of the Invention (Test No. 5-2) are shown in comparison. As shown in this figure, in the nugget of the welded joint prepared by the conventional electrode chips, although the sufficiently large nugget diameter is obtained, the curvature radius at both ends of the nugget in its diameter direction is small and it is biconvex shaped. In contrast, in the nugget of the welded joint prepared by the outer periphery pressure type electrode chips, although the nugget diameter thereof is almost similar to that of the conventional one, the curvature radius at both ends of the nugget in its diameter direction is extremely increased and it apparently has a pill case shape (approximately cylindrical shape).

As is apparent from the above results, it has been confirmed that the spot welded joint excellent in joint strength can be provided by applying the present invention, even it is the welded joint obtained by spot-welding high strength steel sheets with each other.

While the present invention has been explained in detail with reference to specific embodiments, it is apparent to one skilled in the art that various changes and modifications can be made therein without departing from the spirit and scope of the present invention.

This application is based on Japanese Patent Application (No. 2013-056659) filed on March 19, 2013, the contents of which are incorporated here by reference.

### DESCRIPTION OF NUMBERS AND SIGNS

- 1,2: Steel sheet
- 3: Nugget

## Claims

1. A spot-welded joint comprising two steel sheets having sheet thicknesses of t₁ and t₂, which have been stacked and spot-welded,
wherein a nugget formed by the spot-welding has a diameter of 3√{(t₁+t₂)/2} or more, where units of the diameter of the nugget, t₁ and t₂ are all mm, and wherein the nugget has a curvature radius at both ends in a diameter direction thereof, in a cross section in a sheet thickness direction, of 0.3(t₁+t₂) or more,
wherein the two steel sheets have a component composition, by mass%, consisting of
C: 0.01 to 0.80%,
Si: 3% or less and
Mn: 0.2 to 10%,
and optionally
at least one kind selected from the group consisting of
Cr: 0.01 to 1.50%,
Mo: 0.01 to 1.50%,
Ni: 0.01 to 1.50%,
Cu: 0.01 to 1.50% and
B: 0.0001 to 0.010%,
at least one kind selected from the group consisting of
Ti: 0.001 to 0.20%,
Nb: 0.001 to 0.20% and
V: 0.001 to 0.20%,
a remainder being Fe and inevitable impurities.

## Patentansprüche

1. Punktschweißverbindung, umfassend zwei Stahlbleche mit Blechdicken von t₁ und t₂, welche übereinander angeordnet und punktgeschweißt wurden,
wobei eine durch das Punktschweißen geformte Schweißlinse einen Durchmesser von 3√{(t₁+t₂)/2} oder mehr aufweist, wobei die Einheiten des Durchmessers der Schweißlinse, von t₁ und t₂ alle mm sind, und
wobei die Schweißlinse einen Krümmungsradius an beiden Enden in einer Durchmesserrichtung davon in einem Querschnitt in einer Blechdickenrichtung von 0,3(t₁+t₂) oder mehr aufweist,
wobei die zwei Stahlbleche einen Bestandteilszusammensetzung, in Massen%, aufweisen, bestehend aus
C: 0,01 bis 0,80%,
Si: 3% oder weniger und
Mn: 0,2 bis 10%,
und gegebenenfalls
mindestens eine Art, ausgewählt aus der Gruppe, bestehend aus
Cr: 0,01 bis 1,50%,
Mo: 0,01 bis 1,50%,
Ni: 0,01 bis 1,50%,
Cu: 0,01 bis 1,50% und
B: 0,0001 bis 0,010%,
mindestens eine Art, ausgewählt aus der Gruppe, bestehend aus
Ti: 0,001 bis 0,20%,
Nb: 0,001 bis 0,20% und
V: 0,001 bis 0,20%,
wobei ein Rest Fe und unvermeidbare Verunreinigungen ist.

## Revendications

1. Joint soudé par points comprenant deux feuilles d'acier ayant des épaisseurs de feuille t₁ et t₂, qui ont été empilées et soudées par points,
dans lequel une pépite formée par la soudure par points a un diamètre de 3√{(*t*₁ + *t*₂)/2} ou plus, où les unités de diamètre de la pépite, t₁ et t₂ sont tous en mm, et dans lequel la pépite a un rayon de courbure à chaque extrémité dans la direction du diamètre de cette dernière, dans une section transversale dans la direction de l'épaisseur de feuille, de 0.3(t₁+t₂) ou plus,
dans lequel les deux feuilles d'acier ont une composition d'éléments consistant en, en % en masse,
C : 0,01 à 0,80%,
Si : 3% ou moins et
Mn: 0,2 à 10%,
et optionnellement
au moins un élément sélectionné par le groupe consistant en
Cr : 0,01 à 1,50%,
Mo : 0,01 à 1,50%,
Ni : 0,01 à 1,50%,
Cu : 0,01 à 1,50%, et
B: 0,0001 à 0,010%,
au moins un élément sélectionné par le groupe consistant en
Ti : 0,001 à 0,20%,
Nb : 0,001 à 0,20%, et
V : 0,001 à 0,20%,
le reste étant Fe et d'inévitables impuretés.
